# EUROPÄISCHE PATENTSCHRIFT

(11) **EP 0 728 092 B1**
(45) Veröffentlichungstag und Bekanntmachung des Hinweises auf die Patenterteilung: **11.02.1998**
(21) Anmeldenummer: 95900075.3
(22) Anmeldetag: 08.11.1994
(51) Int. Cl.: B62D 5/09, B62D 5/083

(54) **HYDRAULISCHER LENKKREISLAUF UND LENKEINRICHTUNG DAZU**
HYDRAULIC STEERING CIRCUIT AND HYDRAULIC CONTROL UNIT FOR THE CIRCUIT
CIRCUIT DE DIRECTION HYDRAULIQUE ET MECANISME DE DIRECTION CONNEXE

(30) Priorität: 13.11.1993 DE 4338847
(43) Veröffentlichungstag der Anmeldung: 28.08.1996
(73) Patentinhaber: HYDRAULIK NORD GMBH, 19370 Parchim (DE)
(72) Erfinder: VOSS, Gerhard, D-19370 Parchim (DE); BERGMANN, Erhard, D-19079 Mirow (DE)
(74) Vertreter: Jaap, Reinhard
(86) Internationale Anmeldenummer: DE9401335
(87) Internationale Veröffentlichungsnummer: WO9513951

(56) Entgegenhaltungen:
- EP-A- 0 137 185
- WO-A-91/12985
- DE-A- 2 810 902
- PATENT ABSTRACTS OF JAPAN vol. 011 no. 380 (M-650) ,11.Dezember 1987 & JP,A,62 149559 (SUMITOMO EATON KIKI KK) 3.Juli 1987,

## Beschreibung

Die Erfindung bezieht sich auf einen hydraulischen Lenkkreislauf für langsamfahrende Fahrzeuge und auf eine hydraulische Lenkeinrichtung dazu, die ein Steuerventil und eine Dosierpumpe besitzt, wobei das Steuerventil einen inneren, vom Lenkrad ansteuerbaren Steuerkolben und eine äußere, mit der Dosierpumpe mechanisch verbundene Steuerhülse besitzt, die beide konzentrisch zueinander angeordnet und die gegen die Kraft einer Feder in einem begrenztem Umfang zueinander drehbar sind und der Steuerkolben und die Steuerhülse miteinander korrespondierende Kanäle zur Verbindung der Dosierpumpe mit Anschlüssen eines Lenkzylinders besitzen.

Lenkkreisläufe dieser Art, die die im Oberbegriff des Anspruchs 1 definierten Merkmale aufweisen, sind hinlänglich bekannt. Sie bestehen im wesentlichen aus einem Tank, einer Versorgungspumpe, einer hydraulischen Lenkeinrichtung und einem hydraulischen Lenkzylinder. Die Lenkeinrichtung besitzt einerseits einen Zulaufanschluß und einen Ablaufanschluß, die beide mit dem Tank verbunden sind und andererseits zwei Zylinderanschlüsse, die mit beiden Zylinderräumen des Lenkzylinders in Verbindung stehen. Der Lenkzylinder ist in der Regel mit einer einseitigen Kolbenstange ausgerüstet, die ihre Bewegung mechanisch über ein Lenkgestänge auf die Lenkräder überträgt.

Durch die einseitige Kolbenstange besitzen die beiden Zylinderräume naturgemäß unterschiedliche Volumen. Bei der Betätigung der Lenkeinrichtung in eine Drehrichtung wird über die Lenkeinrichtung dosiertes Öl in eine der beiden Zylinderräume gefördert und gleichzeitig das Öl aus dem anderen Zylinderraum verdrängt und dabei wieder über die Lenkeinrichtung zum Tank geleitet. Für beide Drehrichtungen stehen dazu in der Lenkeinrichtung die gleichen Kanäle im Steuerkolben zur Verfügung.
Die Funktion eines derartigen Lenkkreislaufes mit einer entsprechenden Lenkeinrichtung ist immer dann zufriedenstellend, wenn den Umständen entsprechend eine ausreichende Lenklast zu überwinden ist.
In bestimmten Einsatzfällen und Einsatzorten können jedoch ziehende Kräfte am Kolben des Lenkzylinders auftreten, wie das beispielsweise bei schneller Fahrt und hoher Lenkraddrehzahl von knickrahmengelenkten Fahrzeugen der Fall ist. Diese ziehende Belastung am Zylinderkolben kann auf Grund des geringeren Ölvolumens auf der Kolbenstangenseite beim Lenken gegen den Boden des Zylinderkolbens zum Wegfall der Lenklast führen. Dadurch läuft der Lenkzylinder der Lenkbewegung vorher. Ein unkontrolliertes Lenkverhalten mit all seiner Gefährlichkeit ist die Folge.
In der WO-A-9112985 ist der Kreislauf mit einer derartigen Lenkeinrichtung beschrieben, in dem zur Verringerung des Einflusses einer fahrdynamisch negativen Dämpfung in der Arbeitsleitung zwischen dem Steuerventil und dem kolbenstangeseitigen Arbeitsraum des Lenkzylinders ein Drossel-Rückschlagventil vorgesehen ist. Dabei ist das Rückschlagventil in der Richtung vom Lenkzylinder zum Steuerventil gesperrt.

Dieser Kreislauf erhöht den gerätetechnischen Aufwand erheblich.
In der DE-A-2810902 wird eine entsprechende Lenkeinrichtung vorgestellt, bei der zur Verringerung der inneren Leckströme Steuerlängsnuten im Steuerkolben in ihrer Länge zweigeteilt ausgeführt sind.
Diese Lösung beseitigt nicht das unkontrollierte Verhalten des Lenkzylinders bei einer ziehenden Belastung.

Es besteht die Aufgabe, einen hydraulischen Lenkkreislauf und eine entsprechende Lenkeinrichtung zu schaffen, die bei Lenkzylinder mit einseitiger und ziehend belasteter Kolbenstange in beiden Lenkrichtungen eine ausreichende Lenklast gewährleistet.

Konstruktiv wird die Aufgabe der Erfindung dadurch gelöst, daß die Ablaufnuten im Steuerkolben in axialer Richtung in eine Ablaufnut, die dem kolbenseitigen Zylinderraum des Lenkzylinders zugeordnet ist und in eine Ablaufnut, die dem kolbenstangenseitigen Zylinderraum des Lenkzylinders zugeordnet ist, aufgeteilt sind und die Öffnung der kolbenstangenseitigen Ablaufnut als Drossel ausgebildet ist.
Es ist zweckdienlich, alle zweigeteilten Ablaufnuten axial zu begrenzen und die Drosseln und/oder Öffnungen als radiale Bohrungen auszuführen.

Die Erfindung beseitigt die Nachteile des Standes der Technik.

Die Erfindung soll nachstehend an einem Ausführungsbeispiel näher erläutert werden.

Dazu zeigen:
- Fig. 1:: einen Ausschnitt eines Kreislaufes mit einer ersten Lösungsvariante, die nicht unter den Anspruch 1 fällt,
- Fig. 2:: einen Ausschnitt eines Kreislaufes mit einer zweiten Lösungsvariante und
- Fig. 3:: einen Ausschnitt aus dem Steuerventil einer Lenkeinrichtung.

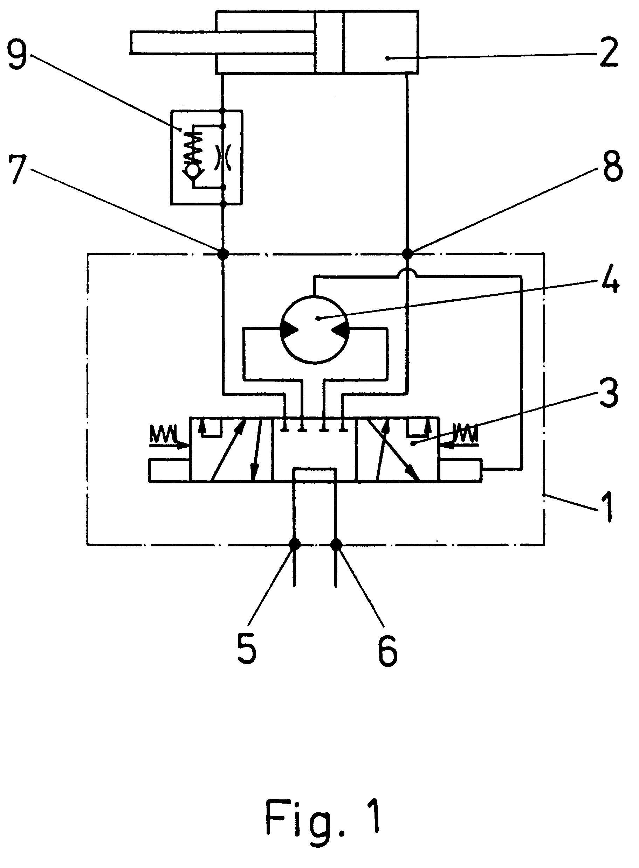

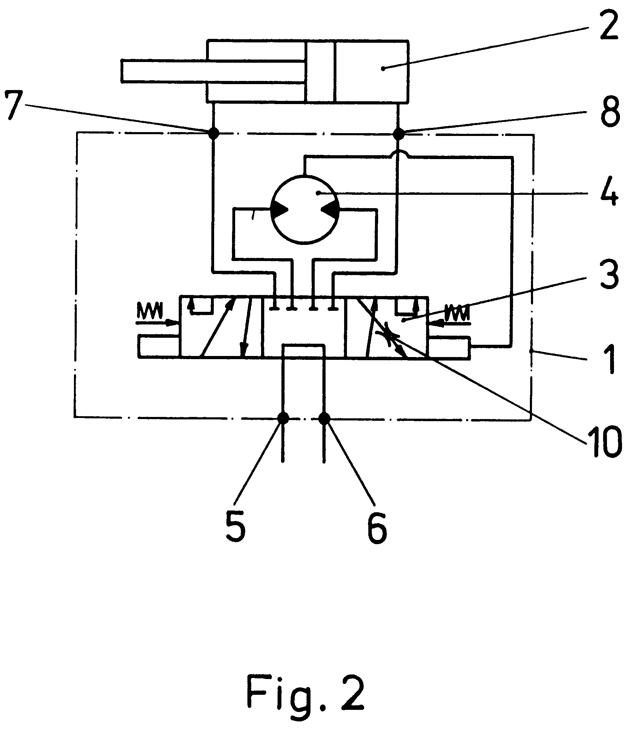

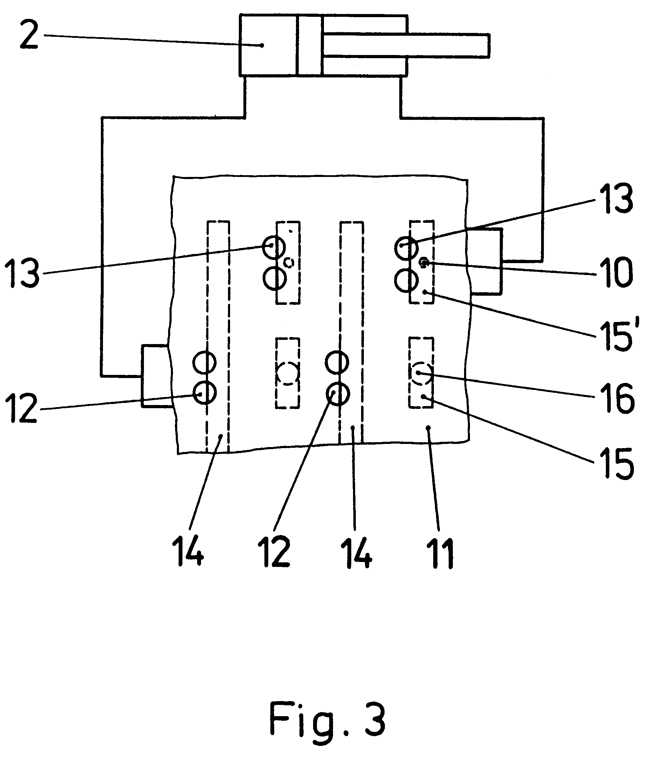

Wie die Fig. 1 und 2 zeigen, besteht ein Lenkkreislauf im wesentlichen aus einer Lenkeinrichtung 1 und einem Lenkzylinder 2. Die Lenkeinrichtung 1 setzt sich aus einem Steuerventil 3 und einer Dosierpumpe 4 zusammen und besitzt einerseits einen Zulaufanschluß 5 und einen Ablaufanschluß 6 und andererseits einen Zylinderanschluß 7 für die z.B. Linksdrehung und einen Zylinderanschluß 8 für die dann Rechtsdrehung. Der Zylinderanschluß 7 ist mit der Kolbenstangenseite und der Zylinderanschluß 8 mit der Kolbenseite des Lenkzylinders 2 verbunden. Gemäß der Fig. 1 ist in der Leitung zwischen dem Steuerventil 3 der Lenkeinrichtung 1 und der Kolben stangenseite des Lenkzylinders 2 ein Drosselrückschlagventil 9 in der Art angeordnet, daß das Drosselrückschlagventil 9 in Richtung zum Lenkzylinder 2 hin öffnet.
An Stelle des Drosselrückschlagventiles 9 befindet sich, wie die Fig. 2 zeigt, erfindungsgemäß eine Drossel 10 im Steuerventil 3 der Lenkeinrichtung 1 und zwar in einem nur für den Rücklauf bestimmten Kanal.
Dazu ist das Steuerventil 3 der Lenkeinrichtung 1 entsprechend der Fig. 3 ausgebildet. Das nach dem Drehschieberprinzip arbeitende Steuerventil 3 besteht aus einem inneren, vom Lenkrad ansteuerbaren Steuerkolben und einer äußeren, mit der Dosierpumpe 4 mechanisch verbundenen Steuerhülse 11.
Die Steuerhülse 11 besitzt eine Reihe von gleichmäßig am Umfang verteilt angeordneten Bohrungen 12 und eine zweite Reihe von gleichmäßig am Umfang verteilt angeordneten, aber gegenüber den Bohrungen 12 radial versetzt ausgerichteten Bohrungen 13. Die Reihe der Bohrungen 12 und die der Bohrungen 13 können einfach oder mehrfach ausgebildet sein. Der nicht dargestellte Steuerkolben weist an seiner Oberfläche mehrere, gleichmäßig am Umfang verteilt angeordnete axiale Zulaufnuten 14 auf. Ebenfalls gleichmäßig und mit gleicher Teilung, aber um die halbe Teilung versetzt sind axiale Ablaufnuten 15 und 15' im Steuerkolben angeordnet. Alle Ablaufnuten 15 und 15' sind jeweils nach beiden Seiten axial begrenzt. Damit sind auch jede Ablaufnut 15 von der zugehörigen Ablaufnut 15' getrennt. Die Ablaufnuten 15 sind über je eine Öffnung 16 und die Ablaufnuten 15' über die Drossel 10 mit dem Inneren des Steuerventils 3 und damit mit dem Ablaufanschluß 6 der Lenkeinrichtung 1 verbunden. Der Querschnitt der Öffnung 16 ist relativ groß gewählt und auf das kolbenseitige Zylindervolumen des Lenkzylinders 2 abgestimmt. Der Querschnitt der Drossel ist relativ klein ausgeführt und auf das kolbenstangenseitige Zylindervolumen des Lenkzylinders 2 ausgerichtet.

Die Funktionsweise der hydraulischen Lenkeinrichtung für mobile Anlagen ist allgemein bekannt.
Das von einer Pumpe bereitgestellte Öl wird in Neutralstellung und bei entsprechender konstruktiven Auslegung der Lenkeinrichtung 1 wirkungslos dem Tank wieder zugeführt.
Beim Betätigen des Lenkrades in eine Richtung werden der Steuerkolben und die Steuerhülse 11 relativ zueinander verdreht und damit Zulaufverbindungen über die Dosierpumpe 4 zu einer Seite des Lenkzylinders 2 freigegeben. Gleichzeitig öffnen sich Ablaufverbindungen im Steuerventil 3 der Lenkeinrichtung 1.
Das am Zulaufanschluß 5 anliegende Öl fließt dabei durch das Steuerventil 3 und die Dosierpumpe 4 und tritt am Zylinderanschluß 7 aus der Lenkeinrichtung 1 aus. Gemäß der Fig. 1 öffnet das Rückschlagventil des Drosselrückschlagventiles 9 und gibt einen drosselfreien Querschnitt frei. Durch den sich einstellenden Druck auf der Kolbenstangenseite verschiebt sich die Kolbenstange des Lenkzylinders 2 und betätigt die zu lenkenden Räder. Dabei wird das Öl aus dem kolbenseitigen Zylinderraum verdrängt und gelangt in bekannter Weise über die Dosierpumpe 4 und das Steuerventil 3 zum Tank.
Bei Drehrichtungsänderung am Lenkrad kehrt sich die Fließrichtung des Öles um. Jetzt wird das im kolbenstangenseitigen Zylinderraum des Lenkzylinders 2 befindliche Öl verdrängt und passiert das Drosselrückschlagventil 9 nur über die Drosselöffnung. Bei einem normalen Lenkverhalten z.B. auf einer Straße ohne Gefälle treten am Drosselrückschlagventil 9 nur geringe Druckverluste und damit nur eine unbedeutende Lenklast auf. Für den Fall, daß an der Kolbenstange des Lenkzylinders 2 eine ziehende Belastung auftritt, z.B. auf einer abschüssigen Straße und bei einer hohen Lenkdrehzahl am Lenkrad eines knickrahmengelenkten Fahrzeuges, erhöht sich der Druckverlust am Drosselrückschlagventil 9. Der sich anstauende Druck vor dem Drosselrückschlagventil wirkt der Bewegungsrichtung der Kolbenstange mit einer der ziehenden Last ungefähr entsprechenden Kraft entgegen. Das Lenkverhalten bleibt normal.
In der konstruktiven Ausführung der Lenkeinrichtung 1 gemäß den Fig. 2 und 3 wird ein gleiches Funktionsverhalten bei einem veränderten Ölstromverlauf erzielt. So ist in der Rücklaufleitung innerhalb des Steuerventiles 3 jedem Zylinderraum des Lenkzylinders 2 eine separate Leitung mit unterschiedlichen Querschnitten zugeordnet.
Bei der Verdrängung des Ölstromes aus dem kolbenseitigen Zylinderraum gelangt das Öl über die Dosierpumpe 4 zu den Bohrungen 12 der Steuerhülse 11 und von dort über die Ablaufnuten 15 und der radialen Öffnung 16 zum Tank.
Bei der Verdrängung des Ölstromes aus dem kolbenstangenseitigen Zylinderraum des Lenkzylinders 2 führt der Weg des Öles wieder über die Dosierpumpe 4 zu den Bohrungen 13 der Steuerhülse 11 und von dort über die Ablaufnuten 15' und der Drossel 10 zum Tank.

## Patentansprüche

1. Hydraulische lenkeinrichtung, bestehend aus einem Steuerventil und einer Dosierpumpe, wobei das Steuerventil einen inneren, vom Lenkrad ansteuerbaren Steuerkolben und eine äußere, mit der Dosierpumpe mechanisch verbundene Steuerhülse besitzt, der Steuerkolben und die Steuerhülse konzentrisch zueinander angeordnet und gegen die Kraft einer Feder in einem begrenzten Umfang zueinander drehbar sind und miteinander korrespondierende Zu- und Ablaufkanäle besitzen, wobei die mit der Dosierpumpe verbundenen Zulaufkanäle und die mit einem Lenkzylinder mit einseitiger Kolbenstange verbundenen Ablaufkanäle des Steuerkolbens als gleichmäßig am Umfang verteilt angeordnete, axiale Nuten ausgebildet sind und die Ablaufkanäle des Steuerkolbens mit Öffnungen zum Inneren des Steuerventils ausgebildet sind,
**dadurch gekennzeichnet**, daß die Ablaufnuten im Steuerkolben in axialer Richtung in eine Ablaufnut (15), die dem kolbenseitigen Zylinderraum des Lenkzylinders (2) zugeordnet ist und in eine Ablaufnut (15'), die dem kolbenstangenseitigen Zylinderraum des Lenkzylinders (2) zugeordnet ist, aufgeteilt sind und die Öffnung der kolbenstangenseitigen Ablaufnut (15') als Drossel (10) ausgebildet ist.

2. Hydraulische Lenkeinrichtung nach Anspruch 1,
**dadurch gekennzeichnet**, daß jede der Ablaufnuten (15, 15') in beiden axialen Richtungen begrenzt ist und die Öffnung (16) der Ablaufnut (15) und/oder die Drossel (10) der Ablaufnut (15') als radiale Bohrungen ausgeführt sind.

## Claims

1. Hydraulic steering arrangement, consisting of a control valve and a metering pump, wherein the control valve possesses an inner control piston activatable by the steering wheel, and an outer control sleeve mechanically connected to the metering pump, and the control piston and control sleeve are disposed concentrically with one another and are rotatable, relative to one another, to a limited extent against the force of a spring and have inlet and outlet ducts which correspond with one another, and wherein the inlet ducts connected to the metering pump and the outlet ducts of the control piston, which are connected to a steering cylinder with a unilateral piston rod, are constructed as axial grooves disposed so as to be uniformly distributed on the periphery and the outlet ducts of the control piston are constructed with openings to the interior of the control valve,
**characterised in that** the outlet grooves in the control piston are divided up, in the axial direction, into an outlet groove (15) which is associated with the cylinder chamber of the steering cylinder (2) on the piston side and an outlet groove (15') which is associated with the cylinder chamber of the steering cylinder (2) on the piston rod side, and the opening of the outlet groove (15') on the piston rod side is constructed as a throttle (10).

2. Hydraulic steering arrangement according to claim 1,
**characterised in that** each of the outlet grooves (15, 15') is limited in both axial directions, and the opening (16) of the outlet groove (15) and/or the throttle (10) of the outlet groove (15') are designed as radial bores.

## Revendications

1. Dispositif hydraulique de direction, se composant d'une vanne de commande et d'une pompe de dosage, la vanne de commande possédant un piston intérieur de commande, qui peut être commandé par le volant de direction, et un manchon extérieur de commande, relié mécaniquement à la pompe de dosage, le piston de commande et le manchon de commande étant disposés concentriquement l'un par rapport à l'autre en pouvant tourner à l'encontre de la force d'un ressort l'un en direction de l'autre dans un périmètre limité et possédant des canaux d'arrivée et de départ qui se correspondent les uns les autres, les canaux d'arrivée qui sont reliés à la pompe de dosage et les canaux de départ du piston de commande qui sont reliés à un cylindre de direction, avec une tige de piston d'un seul côté, étant constitués sous la forme de rainures axiales, disposées de façon régulièrement répartie sur le pourtour et les canaux de départ du piston de commande étant constitués avec des ouvertures vers l'intérieur de la vanne de commande,
caractérisé en ce que
- les rainures de départ sont réparties dans le piston de commande dans le sens axial en une rainure de départ (15), qui est associée à la chambre du cylindre de direction (2), située du côté du piston, et en une rainure de départ (15'), qui est associée à la chambre du cylindre de direction (2) située du côté de la tige du piston, et
- l'ouverture de la rainure de départ (15'), située du côté de la tige du piston, est constituée sous la forme d'un étranglement (10).

2. Dispositif hydraulique de direction, selon la revendication 1,
caractérisé en ce que
- chacune des rainures de départ (15, 15') est limitée dans les deux directions axiales et
- l'ouverture (16) de la rainure de départ (15) et/ou l'étranglement (10) de la rainure de départ (15') sont réalisées sous la forme d'alésages radiaux.
